(19) Europäisches Patentamt
European Patent Office
Office européen des brevets

(11) Veröffentlichungsnummer: **0 184 751**
**A2**

(12) # EUROPÄISCHE PATENTANMELDUNG

(21) Anmeldenummer: **85115277.7**

(22) Anmeldetag: **02.12.85**

(51) Int. Cl.⁴: **C 07 C 93/14**, C 08 G 18/30

(30) Priorität: **14.12.84 DE 3445644**

(43) Veröffentlichungstag der Anmeldung: **18.06.86 Patentblatt 86/25**

(84) Benannte Vertragsstaaten: **DE FR GB**

(71) Anmelder: **BAYER AG, Konzernverwaltung RP Patentabteilung, D-5090 Leverkusen 1 Bayerwerk (DE)**

(72) Erfinder: **Horstmann, Walter, Dr., Eichenweg 17, D-5060 Bergisch-Gladbach 2 (DE)**

(54) **Neue Diaminoalkyldiphenylether, ein Verfahren zu ihrer Herstellung sowie deren Verwendung.**

(57) Neue Diaminoalkyldiphenylether der Formel

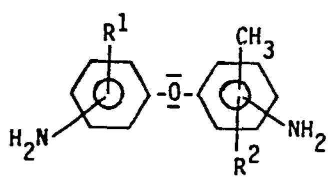
,

worin
$R^1$ und $R^2$ gleich oder verschieden sind und Wasserstoff oder Methyl bedeuten, wobei jedoch $R^1$ und $R^2$ nicht gleichzeitig für Methyl stehen,
werden hergestellt, indem man Alkyldiphenylether der Formel

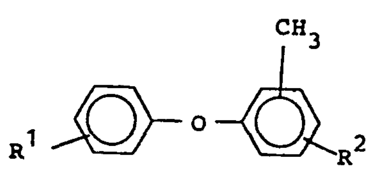
,

worin
$R^1$ und $R^2$ die obengenannte Bedeutung besitzen,

acetyliert, die erhaltenen Diacetylverbindungen in wäßriger-alkoholischer Lösung oder Suspension mit Hydroxylamin in die entsprechenden Dioxime überführt, die getrockneten Dioxime einer Beckmannschen Umlagerung unterwirft und anschließend die dabei gebildeten Diacetylaminoalkyldiphenylether mit wäßriger Mineralsäuren oder Alkalilaugen zu den Diaminen verseift.

Die neuen Diaminoalkyldiphenylether finden Verwendung bei der Herstellung von Farbstoffen und Polyurethanen und dienen als Monomere zur Herstellung von Polymeren.

EP 0 184 751 A2

BAYER AKTIENGESELLSCHAFT
5090 Leverkusen, Bayerwerk
Konzernverwaltung RP
Patentabteilung
Bg/by-c 13. 12. 84

# Neue Diaminoalkyldiphenylether, ein Verfahren zu ihrer Herstellung sowie deren Verwendung

Die Erfindung betrifft neue Diaminoalkyldiphenylether, ein Verfahren zu ihrer Herstellung sowie die Verwendung der neuen Diaminoalkyldiphenylether.

Die Diaminoalkyldiphenylether der allgemeinen Formel

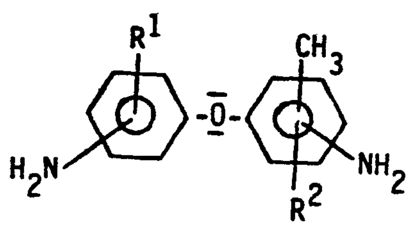

(I),

worin

$R^1$ und $R^2$ gleich oder verschieden sind und Wasserstoff oder Methyl bedeuten, wobei jedoch $R^1$ und $R^2$ nicht gleichzeitig für Methyl stehen,

sind neu.

Bevorzugt sind die neuen Diaminoalkyldiphenylether der allgemeinen Formel

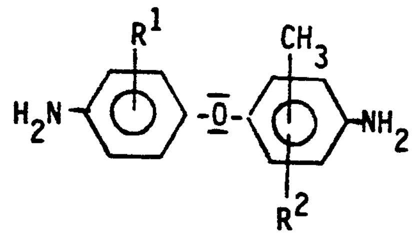

(II),

worin

$R^1$ und $R^2$ gleich oder verschieden sind und Wasserstoff oder Methyl bedeuten, wobei jedoch $R^1$ und $R^2$ nicht gleichzeitig für Methyl stehen.

Besonders bevorzugt sind die Diaminoalkyldiphenylether der Formel

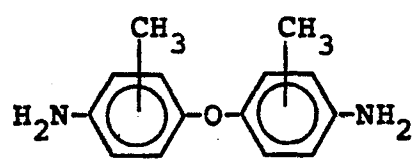

(III).

Als neue Diaminoalkyldiphenylether im Rahmen der Erfindung seien genannt:
4,4'-Diamino-2-methyl-diphenylether,
4,4'-Diamino-2,2'-dimethyl-diphenylether,
4,4'-Diamino-3,3'-dimethyl-diphenylether,
4,4'-Diamino-2,3'-dimethyl-diphenylether,
4,4'-Diamino-2,6-dimethyl-diphenylether und
2,4'-Diamino-4,2'-dimethyl-diphenylether,
bevorzugt

4,4'-Diamino-2,2'-dimethyl-diphenylether,
4,4'-Diamino-3,3'-dimethyl-diphenylether und
4,4'-Diamino-2,6-dimethyl-diphenylether,
besonders bevorzugt
4,4'-Diamino-2,2'-dimethyl-diphenylether.

Weiterhin betrifft die Erfindung ein Verfahren zur Herstellung der neuen Diaminoalkyldiphenylether der Formel

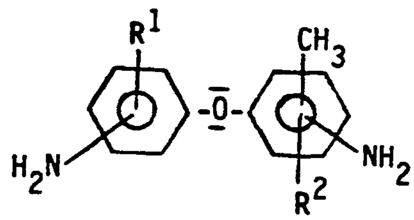

(I),

worin

$R^1$ und $R^2$ gleich oder verschieden sind und Wasserstoff oder Methyl bedeuten, wobei jedoch $R^1$ und $R^2$ nicht gleichzeitig für Methyl stehen,

das dadurch gekennzeichnet ist, daß man Alkyldiphenylether der Formel

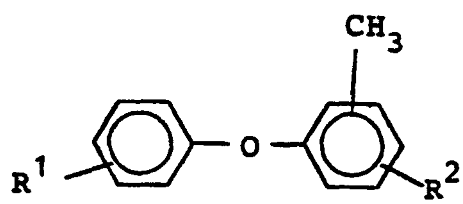

(IV),

worin

$R^1$ und $R^2$ die obengenannte Bedeutung besitzen,

acetyliert, die erhaltenen Diacetylverbindungen in wäßrig-alkoholischer Lösung oder Suspension mit Hydroxylamin in die entsprechenden Dioxime überführt, die getrockneten Dioxime einer Beckmannschen Umlagerung unterwirft und anschließend die dabei gebildeten Diacetylamino-alkyldiphenylether mit wäßrigen Mineralsäuren oder Alkalilaugen zu den Diaminen verseift.

Das erfindungsgemäße Verfahren kann anhand der folgenden Reaktionsgleichung erläutert werden:

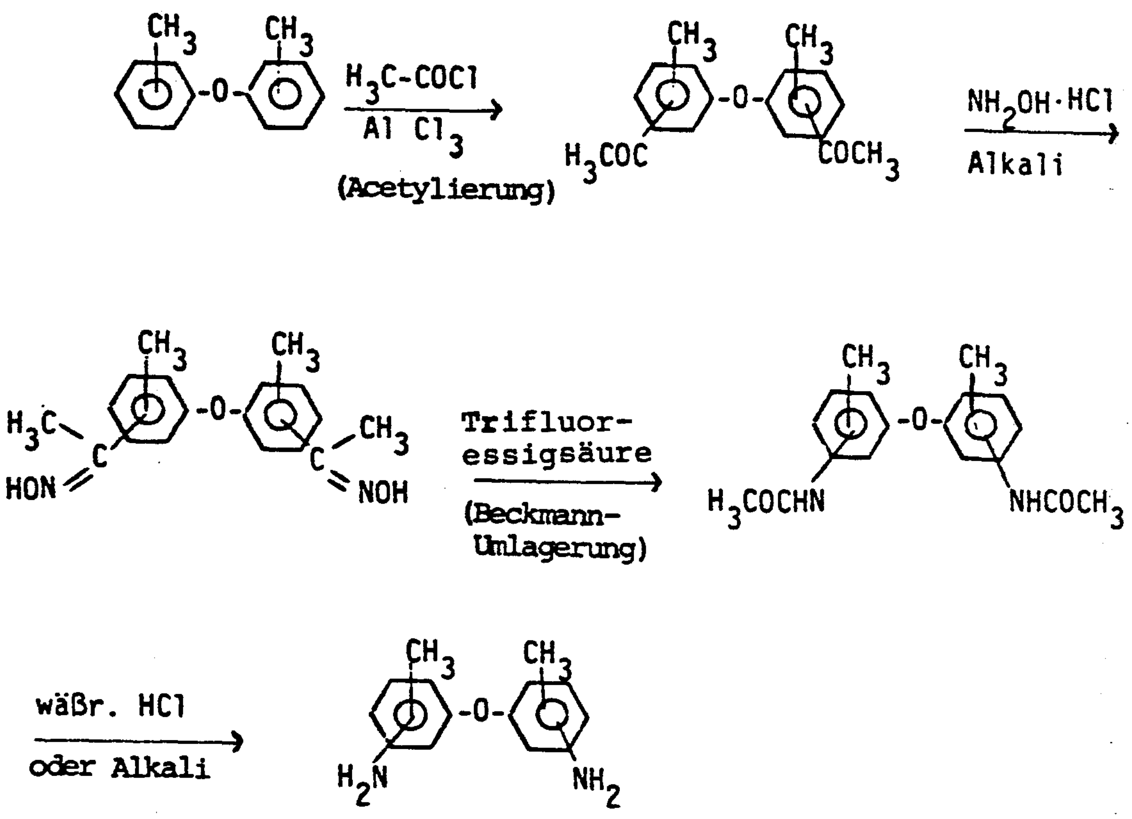

0184751

Die als Ausgangsprodukte eingesetzten Mono- oder Dialkyldiphenylether der allgemeinen Formel (IV) lassen sich durch Umsetzung von Alkylphenolen mit Alkylhalogenbenzolen unter Kupferkatalyse herstellen. In sehr guter Ausbeute erhält man beispielsweise aus o-Chlortoluol und o-Kresol unter Kupfer-(I)-oxyd-Katalyse Di-o-tolylether. Isomerengemische von Ditolylethern fallen bei der technischen Kresolsynthese aus Chlortoluolgemischen als Nebenprodukte an (vgl. Industrial and Engineering Chemistry, Vol. 38, 254 (1946)). Die Isomerengemische von Ditolylethern können nach destillativer Auftrennung in die reinen Isomeren in das erfindungsgemäße Verfahren eingesetzt werden. Weiterhin ist es möglich bestimmte Isomerengemische, z.B. ein Gemisch von 25 Gew.-% 2,2'-, 25 Gew.-% 3,3'- und 50 Gew.-% 2,3'-Ditolylether direkt in das erfindungsgemäße Verfahren einzusetzen.

Folgende Alkyl-diphenylether können beispielsweise in das erfindungsgemäße Verfahren eingesetzt werden: 2-Methyl-diphenylether, 3-Methyldiphenylether, 2,2'-, 2,3'-, 3,3'- und 2,4'-Ditolylether, 2,5- und 2,6-Dimethyl-diphenylether.

Die Acetylierung der Alkyl-diphenylether erfolgt in üblicher Weise nach der Friedel-Craftschen Methode (vgl. Houben-Weyl, Methoden der org. Chemie, Band VIII/2a, S. 15 ff.) mit etwa doppelt molaren Mengen (bevorzugt 2,1 bis 2,2 Mol pro Mol Alkyldiphenylether) an Acetylchlorid in einem organischen Lösungsmittel, wie Methylenchlorid, Di- und/oder Tetrachlorethan, in Gegenwart von wasserfreiem Aluminiumchlorid im Temperaturbereich von etwa 0 bis 50°C, bevorzugt 20 bis 30°C. Die Ausbeuten dieser Umsetzung sind praktisch quantitativ und die Qualität der Diacetylverbindung ist so, daß man sie direkt zu den Dioximen weiterverarbeiten kann.

Zur Einführung der Oximinogruppen geht man im allgemeinen so vor (vgl. Houben-Weyl, Methoden der organischen Chemie, Bd. X/4, S. 55 ff.), daß man die Diacetylverbindung in wäßrigem Methanol und/oder Ethanol mit überschüssigem Hydroxylammoniumchlorid und/oder -sulfat bei Temperaturen von etwa 60 bis 90°C, bevorzugt 70 bis 80°C, umsetzt und die freiwerdende Salz- und/oder Schwefelsäure durch Zusatz von Alkalilauge bindet. Feste Dioxime isoliert man nach Ansäuern mit Mineralsäure durch Filtration, flüssige Dioxime durch Extraktion mit einem geeigneten Lösungsmittel, wie Ether, Toluol oder Chlorbenzol, und Abdampfen des Lösungsmittels.

Die Beckmann-Umlagerung der erhaltenen Dioxime führt zu den entsprechenden Diacetamino-alkyldiphenylethern (vgl. Organic Reactions, Vol. 11, 55 ff.). Dazu kann man beispielsweise das trockene Dioxim in konzentrierter Schwefelsäure auf Temperaturen von etwa 90 bis 110°C, bevorzugt 100 bis 110°C, erhitzen oder eine Lösung des Dioxims in Trifluoressigsäure in siedende Trifluoressigsäure bei Temperaturen von etwa 70 bis 80°C einlaufen lassen oder in eine Lösung des Dioxims in Gemischen von Essigsäure und Essigsäureanhydrid bei Temperaturen von

etwa 60 bis 120°C, vorzugsweise 70 bis 80°C, Salzsäuregas einleiten. Zur Aufarbeitung trägt man auf Wasser aus und isoliert die in der Regel festen Diacetaminoverbindungen. Die Ausbeuten dieser Umlagerungsreaktion liegen bei etwa 80 bis 90 % der Theorie.

Die erfindungsgemäßen neuen Diaminoalkyldiphenylether erhält man durch Verseifung der Diacetaminoverbindungen, indem man z.B. bei Temperaturen von etwa 80 bis 100°C, bevorzugt 90 bis 95°C, mit einer etwa 20 bis 25 %igen wäßrigen Salzsäure erhitzt und nach Abschluß der Reaktion alkalisch stellt oder mit einer etwa 20 bis 30 %igen Lösung von Kaliumhydroxid in wäßrigem Methanol unter Druck (etwa 3 bis 5 bar) bei Temperaturen von etwa 100 bis 140°C, bevorzugt 110 bis 120°C, behandelt, die abgeschiedenen festen oder flüssigen Diamine abtrennt und durch Kristallisation oder Destillation reinigt.

Der beschriebene Herstellungsweg eignet sich hervorragend zur industriellen Herstellung der beanspruchten neuen Diamino-alkyldiphenylether, die zur Herstellung von Farbstoffen, Polyurethanen und als Monomere zur Synthese von Polymeren Verwendung finden.

Nach anderen Verfahren sind die beschriebenen Diamine nicht oder nur mit großem Aufwand zu gewinnen. Zum Beispiel liefert die Nitrierung von Alkyldiphenylethern mit Salpetersäure neben Oxidationsprodukten keine

definierten Dinitroverbindungen, die man zu den erfindungsgemäßen Diaminen reduzieren kann (Nitrierung in Gegenwart von Schwefelsäure scheidet wegen der gleichzeitig erfolgenden Sulfierung der Alkyldiphenylether aus). Die Umsetzung von Halogen-nitro-alkylbenzolen mit aktiviertem Halogenatom (ortho- bzw. para-ständige Nitrogruppe) mit Nitro-alkylphenolen führt zwar zu definierten Dinitro-alkyldiphenylethern (vgl. Jap. Patent No. 51-1436 (1976)), die zu den beschriebenen Diaminen reduziert werden können, aber eine wirtschaftliche Herstellung scheitert an der schweren Zugänglichkeit der Ausgangsstoffe.

Die Verwendung der neuen Diamine zur Herstellung von Farbstoffen beruht beispielsweise darauf, daß man tetrazotiert und mit geeigneten Kupplungskomponenten, wie N-Benzoyl-H-Säure oder N-Acetyl-I-Säure, zu wasserlöslichen Farbstoffen umsetzt. Gelbe, wasserunlösliche Pigmentfarbstoffe erhält man beispielsweise, indem man die Diamine mit 2 Molen Diketen zu Bis-acetessigsäurearyliden der allgemeinen Formel

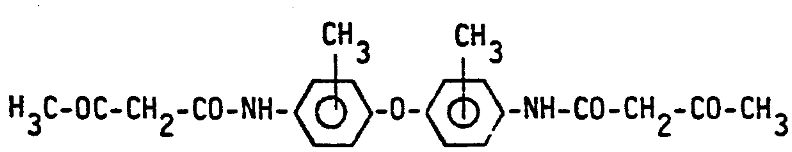

umsetzt und mit 2 Molen einer geeigneten Diazokomponente, z.B. 3-Amino-benzoesäureanilid, kuppelt. Zu roten Pigmentfarbstoffen kommt man, wenn man Monoazofarbstoffe aus geeigneten Diazokomponenten und Naphthol-AS-Komponenten mittels der neuen Diamine zu schwerlöslichen Diazopigmenten verkoppelt.

Um aus den neuen Diamino-alkyldiphenylethern Polyurethane herstellen zu können, ist ihre vorherige Überführung in Diisocyanate erforderlich. Diese wird in üblicher Weise mit Phosgen in einem geeigneten Lösungsmittel, wie Chlorbenzol, durchgeführt (vgl. W. Siefgen, Ann. 562, 75 ff. (1949)).

Beispielsweise kann man 4,4'-Diamino-2,2'-ditolylether in chlorbenzolischer Lösung bei Temperaturen von 120 bis 130°C mit Phosgen in guter Ausbeute in 2,2'-Ditolylether-4,4'-diisocyanat überführen. Dieses neue Diisocyanat stellt eine bei 42 bis 43°C schmelzende und bei 182 bis 185°C/2,3 mbar siedende Substanz dar, die sich nach bekannten Methoden mit mehrfunktionellen Alkoholen zu Polyurethanen umsetzen läßt.

Als Diaminoalkyldiphenylether zur Herstellung von Farbstoffen und Polymeren eignen sich besonders folgende Verbindungen:

4,4'-Diamino-2-methyl-diphenylether,
4,4'-Diamino-2,2'-dimethyl-diphenylether,
4,4'-Diamino-3,3'-dimethyl-diphenylether,
2,4'-Diamino-4,2'-dimethyl-diphenylether,
4,4'-Diamino-2,3'-dimethyl-diphenylether und
4,4'-Diamino-2,6-dimethyl-diphenylether.

Die zur Herstellung der erfindungsgemäßen Diamine benötigten Diacetyl-alkyldiphenylether und deren Dioxime

werden nach bekannten Verfahren gewonnen (vgl. Houben-Weyl, Methoden der organischen Chemie, Band VIII, 2a Seite 15 ff. und Band X/4, Seite 55 ff.).

Ausgehend von den Dioximen wird in den nachfolgenden Beispielen die Umsetzung zu den Diacetylaminoalkyldiphenylethern und deren Verseifung zu den beanspruchten Diaminen beschrieben.

Beispiel 1

156 g (0,5 Mol) des Dioxims (Fp. 183-184°C) des 4,4'-Diacetyl-2,2'-ditolylethers wurden bei 20 bis 25°C in 400 ml Trifluoressigsäure gelöst. Diese Lösung tropfte man innerhalb von 2 Stunden in 100 ml vorgelegte siedende Trifluoressigsäure ein, wobei die Innentemperatur stetig von 72 auf 81°C anstieg. Man rührte eine Stunde bei 80°C nach und ließ das Reaktionsgemisch langsam in 1,5 kg Eiswasser einlaufen. Das feste Umlagerungsprodukt wurde abgesaugt, säurefrei gewaschen und getrocknet. Man erhielt 140 g 4,4'-Diacetylamino-2,2'-ditolylether, Schmelzpunkt 214-216°C. Umkristallisation einer Probe aus Ethanol/Wasser (1:1) erhöhte den Schmelzpunkt auf 216-217°C.

Zur Verseifung suspendierte man die 140 g Diacetylaminoverbindung in 900 ml 20 %iger Salzsäure und verrührte 4 bis 5 Stunden lang bei 90 bis 95°C. Nach vollständiger Umsetzung stellte man durch langsame Zugabe von 250 ml konzentrierter Natronlauge alkalisch, kühlte ab, wobei das Reaktionsprodukt erstarrte, saugte ab, wusch neutral und trocknete bei 40°C im Vakuum. Man erhielt 98 g 4,4'-Diamino-2,2'-ditolylether vom Schmelzpunkt 103 bis 105°C. Die Verbindung konnte aus Ligroin umkristallisiert werden (Schmelzpunkt 104 bis 106°C). In der Regel reichte die nicht umkristallisierte Ware zur Herstellung von Farbstoffen und des Diisocyanats aus.

Beispiel 2

187 g (0,6 Mol) des Dioxims (Fp. 134-136°C) des 4,4'-Diacetyl-3,3'-ditolylethers wurden in 600 ml eines 1:1-Gemisches von Eisessig und Essigsäureanhydrid gelöst, auf 70°C erhitzt und ein trockener Salzsäuregasstrom 3 Stunden lang eingeleitet. Anschließend kühlte man auf Raumtemperatur ab, verdünnte langsam mit 500 ml Eiswasser, saugte das abgeschiedene Umlagerungsprodukt scharf ab, wusch mit Wasser neutral und trocknete bei 90°C im Vakuum. Man erhielt 168 g 4,4'-Diacetylamino-3,3'-ditolylether (Schmelzpunkt 260-262°C). Eine Probe schmolz nach Umkristallisation aus Methylglykol bei 263 bis 264°C.

Zur Verseifung suspendierte man die 168 g Diacetylaminoverbindung in einer Lösung von 73 g Ätzkali in 250 ml 80 %igem wäßrigem Methanol und erhitzte 2 bis 3 Stunden unter Druck auf 120°C. Nach dem Abkühlen saugte man das Reaktionsprodukt ab, wusch mit Wasser neutral und trocknete. Man erhielt so 95 g 4,4'-Diamino-3,3'-ditolylether (Schmelzpunkt 103 bis 108°C). Aus Toluol umkristallisiert schmolz das Diamin bei 108 bis 110°C.

Patentansprüche .

1. Diamino-alkyldiphenylether der Formel

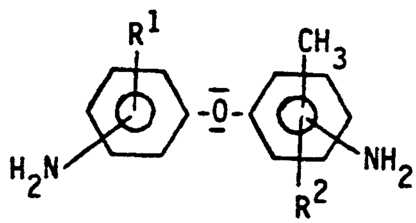

,

worin

$R^1$ und $R^2$ gleich oder verschieden sind und Wasserstoff oder Methyl bedeuten, wobei jedoch $R^1$ und $R^2$ nicht gleichzeitig für Methyl stehen.

2. Diamino-alkyldiphenylether der Formel

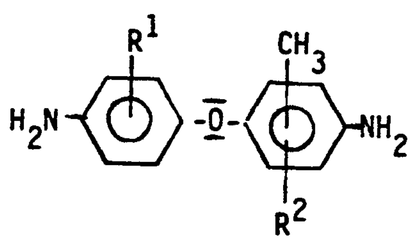

,

worin

$R^1$ und $R^2$ gleich oder verschieden sind und Wasserstoff oder Methyl bedeuten, wobei jedoch $R^1$ und $R^2$ nicht gleichzeitig für Methyl stehen.

3. Verfahren zur Herstellung der Diamino-alkyldiphenylether der Formel

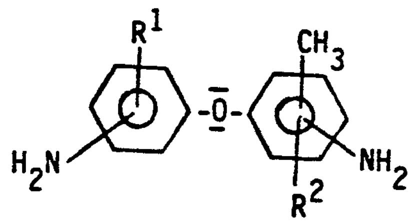

,

worin

$R^1$ und $R^2$ gleich oder verschieden sind und Wasserstoff oder Methyl bedeuten, wobei jedoch $R^1$ und $R^2$ nicht gleichzeitig für Methyl stehen,

dadurch gekennzeichnet, daß man Alkyldiphenylether der Formel

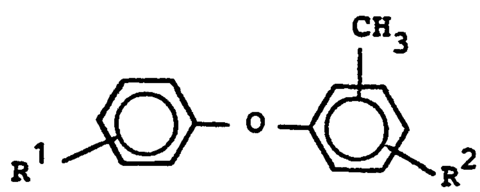

,

worin

$R^1$ und $R^2$ die obengenannte Bedeutung besitzen,

acetyliert, die erhaltenen Diacetylverbindungen in wäßrig-alkoholischer Lösung oder Suspension mit Hydroxylamin in die entsprechenden Dioxime überführt, die getrockneten Dioxime einer Beckmannschen Umlagerung unterwirft und anschließend die dabei gebildeten Diacetylamino-alkyldiphenylether mit wäßrigen Mineralsäuren oder Alkalilaugen zu den Diaminen verseift.

4. Verfahren nach Anspruch 3, dadurch gekennzeichnet, daß man die Acetylierung der Alkyldiphenylether mit einer doppelt molaren Menge an Acetylchlorid in einem organischen Lösungsmittel in Gegenwart von wasserfreiem Aluminiumchlorid im Temperaturbereich von 0 bis 50°C durchführt.

5. Verfahren nach Ansprüchen 3 und 4, dadurch gekennzeichnet, daß man als organische Lösungsmittel Methylenchlorid, Di- und/oder Tetrachlorethan einsetzt.

6. Verfahren nach Ansprüchen 3 bis 5, dadurch gekennzeichnet, daß man die Diacetylverbindungen in wäßrigem Methanol und/oder Ethanol mit überschüssigem Hydroxylammoniumchlorid und/oder -sulfat bei Temperaturen von 60 bis 90°C umsetzt und die freiwerdende Salz- und/oder Schwefelsäure durch Zusatz von Alkalilaugen bindet.

7. Verfahren nach Ansprüchen 3 bis 6, dadurch gekennzeichnet, daß man die getrockneten Dioxime in konzentrierter Schwefelsäure auf Temperaturen von 90 bis 110°C erhitzt oder eine Lösung des Dioxims in Trifluoressigsäure in siedende Trifluoressigsäure

bei Temperaturen von 70 bis 80°C einlaufen läßt oder in eine Lösung des Dioxims in Gemischen von Essigsäure und Essigsäureanhydrid bei Temperaturen von 60 bis 120°C Salzsäuregas einleitet.

8. Verfahren nach Ansprüchen 3 bis 7, dadurch gekennzeichnet, daß man die Diacetylaminoalkyldiphenylether mit einer 20 bis 25 %igen wäßrigen Salzsäure bei Temperaturen von 80 bis 100°C oder mit einer 20 bis 30 %igen Lösung von Kaliumhydroxid in wäßrigem Methanol unter Druck bei Temperaturen von 100 bis 140°C verseift.

9. Verwendung der neuen Diaminoalkyldiphenylether zur Herstellung von Farbstoffen, Polyurethanen und Polymeren.